# EUROPÄISCHE PATENTSCHRIFT

(11) **EP 0 738 899 B1**
(45) Veröffentlichungstag und Bekanntmachung des Hinweises auf die Patenterteilung: **29.03.2000**
(21) Anmeldenummer: 95203130.0
(22) Anmeldetag: 04.05.1994
(51) Int. Cl.: G01S 7/486, G01S 7/497

(54) **Vorrichtung zur Distanzmessung**
Distance measuring device
Dispositif de mesure de distance

(30) Priorität: 15.05.1993 DE 4316348
(43) Veröffentlichungstag der Anmeldung: 23.10.1996
(62) Teilanmeldung aus: 94916928.8
(73) Patentinhaber: Leica Geosystems AG, 9435 Heerbrugg (CH)
(72) Erfinder: Ehbets, Hartmut, CH-9432 Platz (CH); Giger, Kurt, CH-9494 Ruethi (CH); Bernhard, Heinz, CH-9035 Grub (CH); Hinderling, Jürg, CH-9435 Heerbrugg (CH)
(74) Vertreter: Büchel, Kurt F., Dr.

(56) Entgegenhaltungen:
- WO-A-93/07510
- DE-A- 3 540 157
- DE-C- 4 002 356
- K. Grimm, P. Frank, K. Giger: "DISTOMAT Wild DI 3000 - Distanzmessung nach dem Laufzeitverfahren mit geodätischer Genauigkeit", Wild Heerbrugg AG, CH-9435 Heerbrugg, Firmendruckschrift V.86
- B. Düllo, c/o Erwin Sick AG, 6370 Stans/DE: "Optischer Distanzsensor auf Basis der Lichtlaufzeitmessung", Zeitschrift "Industrie", Nr. 11, 1992, Seiten 6-8
- Erwin Sick GmbH, Optik-Elektronik, Postfach 310, D-79177 Waldkirch, Produktinformation "DME 2000 Entfernungs-Meßgerät", Veröffentlichungsnummer: 8006278.0494 SF BW, Seiten 1-4

## Beschreibung

Die Erfindung betrifft eine Vorrichtung zur Distanzmessung mit den im Oberbegriff des Anspruches 1 angegebenen Merkmalen.

Eine Vorrichtung dieser Art ist aus einer Veröffentlichung der Fa. Wild Heerbrugg AG, CH-9435 Heerbrugg, Schweiz, V.86, mit dem Titel "DISTOMAT Wied DI 3000, "Distanzmessung nach dem Laufzeitmeßverfahren mit geodätischer Genauigkeit" (Verfasser: K.Grimm, P.Frank, K.Giger) bekannt. Sie wird auch zur Messung von Distanzen zu Objekten mit natürlichen rauhen Oberflächen eingesetzt. So werden zur Vermessung von schwer zugänglichen Oberflächen, wie z.B. Steinbrüche, Kavernenwände, Tunnelprofile usw., bei denen Distanzen bis zu einigen 100 m gemessen werden müssen, Vorrichtungen verwendet, bei denen gepulste Infrarothalbleiterlaserdioden mit großen emittierenden Oberflächen als Strahlungsquellen dienen. Es werden Pulslängen von 12 nsec verwendet. Der Vorteil dieser Strahlungsquellen besteht darin, daß Strahlungspulse hoher Spitzenleistung in der Größenordnung von einigen Watt erzeugt werden können, so daß damit die geforderten Meßdistanzen von einigen 100 m erreicht werden. Die Genauigkeit beträgt 5-10 mm. Ein Nachteil ergibt sich aus den relativ großen Abmessungen der emittierenden Oberfläche dieser Laser in der Größenordnung von 300 µm, weil dadurch die Abstrahlungskeule dieser Vorrichtungen eine Divergenz von ca. 2 mrad aufweist, wodurch bei 50 m bereits ein Bündelquerschnitt von 0,1 m vorhanden ist. Bei sehr kurzer Distanz hat der Bündelquerschnitt dieser Vorrichtung immer noch einen Durchmesser von mehreren cm, weil man zur Aussendung der Pulsleistung von einigen Watt bei 2 mrad Bündeldivergenz Objektivdurchmesser von mehreren cm braucht.

Ein Nachteil besteht darin, daß wegen der infraroten Meßstrahlung die aktuell angemessene Objektstelle nicht erkennbar ist. Um den Zielort sichtbar zu machen, wird ein zusätzlicher Laser mit sichtbarer Strahlungsemission vorgesehen, dessen Strahlachse zur Sendestrahlachse sorgfältig justiert werden muß. Das Gerät ist mit einer elektronischen Auswerte- und Anzeigevorrichtung ausgestattet, die es auch gestattet, über eine Tastatur zusätzliche Werte einzugeben und Berechnungen auszuführen.

Aus der DE 40 02 356 C1 ist ebenfalls ein Abstandsmeßgerät mit getrenntem Sende- und Empfangsobjektiv bekannt. Die Sendeeinrichtung enthält zwei elektronisch komplementär schaltbare Laserdioden, von denen eine die Lichtwellenzüge auf die Meßstrecke, die andere die Lichtwellenzüge auf die Referenzstrecke schickt. Beide Lichtwellenzüge werden vom gleichen Fotoempfänger abwechselnd empfangen, der an eine Auswerteelektronik angeschlossen ist. Aus der Phasenverschiebung zwischen den beiden Lichtwellenzügen wird der Abstand zum Ziel ermittelt. Es ist aus der Druckschrift nicht zu entnehmen, ob die Laserdioden sichtbares Licht emittieren. Der zu messende Abstandsbereich wird mit 2 bis 10 m angegeben und die Meßgenauigkeit soll im Bereich einiger mm liegen.

In der Zeitschrift "Industrie", 11/92, Seiten 6-8, B. Düllo: "Optischer Distanzsensor auf Basis der Lichtlaufseit" wird ein Entfernungs-Meßgerät DME 2000 der Fa. Sick GmbH mit optischer Distanzmessung auf Basis Laufzeitmessung beschrieben, das mit zwei sichtbares Licht emittierenden Halbleiterlaserdioden arbeitet. Das erforderliche Sendelicht erzeugt eine Laserdiode mit Kollimatoroptik, die zweite Laserdiode liefert das notwendige Referenzsignal direkt an den Empfänger. Das Sendestrahlenbündel und das Empfangsstrahlenbündel sind koaxial zueinander angeordnet, so daß nur ein einziges Objektiv mit relativ großem Durchmesser verwendet wird. Der Meßabstand zu natürlichen rauhen Oberflächen beträgt 0,1 bis 2 m mit einem Lichtfleckdurchmesser von ca. 3 mm. Für größere Objektentfernungen bis zu 130 m muß eine Reflektorfolie auf dem anzumessenden Objekt angebracht werden. Der Lichtfleckdurchmesser beträgt bei diesen Distanzen ca. 250 mm. In Verbindung mit der koaxialen Sende-Empfangsoptik wird als Empfänger eine relativ großflächige PIN-Fotodiode verwendet. Damit ist dann zwar eine Überlappung der stark divergenten Empfangslichtkeule mit dem Sendebündel gegeben, so daß Distanzen bis herab zu 0,1 m gemessen werden können, jedoch lassen sich mit diesen großflächigen Detektoren ohne zusätzliche Reflektoren keine großen Meßreichweiten erzielen.

Im Baugewerbe, insbesondere beim Innenausbau und im Installationsgewerbe besteht die Forderung, Distanzen bis zu 30 m auf rauhen Oberflächen ohne zusätzliche Präparation durch Reflektoren und mit einer Meßgenauigkeit von 1 bis 2 mm messen zu können.

Der Erfindung liegt daher die Aufgabe zugrunde, mit einem stark kollimierten sichtbaren Meßstrahlenbündel eine Distanzmessung zu natürlichen rauhen Oberflächen im gesamten Distanzbereich von der Vorderkante des Meßgerätes bis zu mindestens 30 m zu ermöglichen. Die Genauigkeit der Messung soll dabei im Millimeterbereich liegen.

Diese Aufgabe wird bei einer Vorrichtung der eingangs genannten Art erfindungsgemäß durch die kennzeichnenden Merkmale des Anspruchs 1 gelöst. Vorteilhafte Ausgestaltungen und Weiterbildungen der Vorrichtung ergeben sich aus den Merkmalen der Unteransprüche 2 bis 9.

Beim Erfindungsgegenstand erzeugt das Kollimatorobjektiv einen stark gebündelten Meßstrahl entlang seiner optischen Achse. Die optische Achse des daneben angeordneten Empfangsobjektivs verläuft zumindest nahezu parallel zu der optischen Achse des Kollimatorobjektivs und liegt mit dieser in einer gemeinsamen Ebene.

Ein die Meßgenauigkeit der erfindungsgemäßen Vorrichtung begrenzender Effekt ergibt sich aus den physikalischen Eigenschaften der modulierten Laserstrahlung im Zusammenwirken mit den anzumessenden rauhen Oberflächen.

Die sichtbare Strahlung der Halbleiterlaserdioden wird als Spektrum von äquidistanten Spektrallinien (Moden) abgestrahlt. Während der Einwirkung des Modulationsstromes ändern sich sowohl die Wellenlängen als auch die Strahldichten (Intensitäten) der Moden. Je nach Wellenlänge ergeben sich daher unterschiedliche Modulationsphasenverzögerungen des Laserpulses bezogen auf den elektrischen Modulationspuls. Die Modulationsphase bezieht sich dabei auf den zeitlichen Schwerpunkt tₛ der Intensitätsvariation l(t) über die Abstrahldauer t des Laserpulses während eines Modulationspulses. Mathematisch ist tₛ gleich dem Integral über I(t)*t*dt dividiert durch das Integral über I(t)*dt., wobei der Integrationsbereich gleich der gesamten Laserpulsdauer ist.

Je nach Modulationsart und Modulationspulsbreite können die je nach Wellenlänge variierenden Modulationsphasenunterschiede zeitlichen Laserpulsverzögerungen von bis zu 1,3 ns entsprechen. Die entsprechenden scheinbaren Distanzunterschiede gehen bis zu 200 mm.

Das von der anzumessenden rauhen Oberfläche zurückgestreute Licht hat wegen der Kohärenz der Laserstrahlung eine granulierte Intensitätsverteilung, die unter der Bezeichnung Speckles bekannt ist. Nur in der Richtung, in die die Laserstrahlung reflektiert würde, wenn die rauhe Oberfläche ein Spiegel wäre, fallen die Speckles der verschiedenen Moden der Laserstrahlung zusammen. Wegen der unterschiedlichen Wellenlänge der Moden ist das für alle anderen Richtungen nicht der Fall, so daß ein Strahlungsfeld mit räumlich unterschiedlichen Modulationsphasen vorliegt.

Die Strahlung, die auf das Empfangsobjektiv fällt und dem Fotodetektor zugeführt wird, hat eine repräsentative Modulationsphase, die durch die mit der entsprechenden Intensität gewichtete Mittelung über alle Modulationsphasen des in das Objektiv einfallenden Strahlungsfeldes entsteht. Dieser Mittelwert schwankt je nach Specklesstruktur über das Strahlungsfeld, d.h. je nach Struktur der rauhen Oberfläche. Durch Verschieben eines Objektes mit makroskopisch gleichförmig erscheinender Oberfläche senkrecht zur Meßrichtung konnte nachgewiesen werden, daß der dieser Modulationsphasenschwankung entsprechende Distanzfehler bis zu 20 mm betragen kann. Überraschenderweise hat sich herausgestellt, daß eine entscheidende Verbesserung der physikalischen Gegebenheit allein dadurch gelingt, daß die Modulation der Laserdioden mit Anregungspulsen erzeugt wird, deren Pulsbreite kleiner 2 ns beträgt. Dann werden die Modulationsphasenunterschiede je nach Wellenlänge so klein, daß die entsprechenden Distanzschwankungen kleiner 2 mm werden.

Die Verwendung von Lichtleitern in Distanzmeßgeräten ist an sich bekannt. Im Zusammenhang mit dem vorliegenden Erfindungsgegenstand ergibt sich der besondere Vorteil, daß der Lichtleiter in seinem Verlauf zum opto-elektronischen Wandler mehrfach gekrümmt werden kann. Dadurch wird die vorstehend beschriebene gewichtete Mittelung über alle Modulationsphasen zusätzlich unterstützt.

Zur Kompensation von Drifteffekten in der Elektronik und in den opto-elektronischen Wandlern ist es bekannt, daß vor und nach der externen Distanzmessung zum Vergleich über eine interne Referenzstrecke bekannter Länge gemessen wird. Zu diesem Zweck wird beim Erfindungsgegenstand ein lichtstreuendes Element in das kollimierte Meßstrahlenbündel so eingeschaltet, daß keine Strahlung über den externen Lichtweg gelangt. Die Streucharakteristik dieses Elementes wird dem Raumbereich angepaßt, in dem sich die Lichtleitereintrittsfläche befindet. Dadurch wird erreicht, daß von jedem Teil des Meßstrahlenbündels Strahlung in die Lichtleitereintrittsfläche gelangt, wodurch Unterschiede der Modulationsphase über den Querschnitt des Meßstrahlenbündels keinen Einfluß auf die Distanzmessung haben. Die Streuintensität pro Flächeneinheit kann so eingestellt werden, daß eine Übersteuerung der Auswerteeinrichtung sicher vermieden wird.

Die erfindungsgemäße Vorrichtung wird nachfolgend anhand von in der Zeichnung schematisch dargestellten Ausführungsbeispielen näher beschrieben, wobei auch auf weitere Vorteile eingegangen wird. Im einzelnen zeigen:
- Fig. 1: eine Gesamtdarstellung der Vorrichtung in Aufsicht,
- Fig. 2: einen in das Sendestrahlenbündel eingesetzten Strahlenteiler und
- Fig. 3: ein in das Sendestrahlenbündel einschaltbares Umlenkprisma.

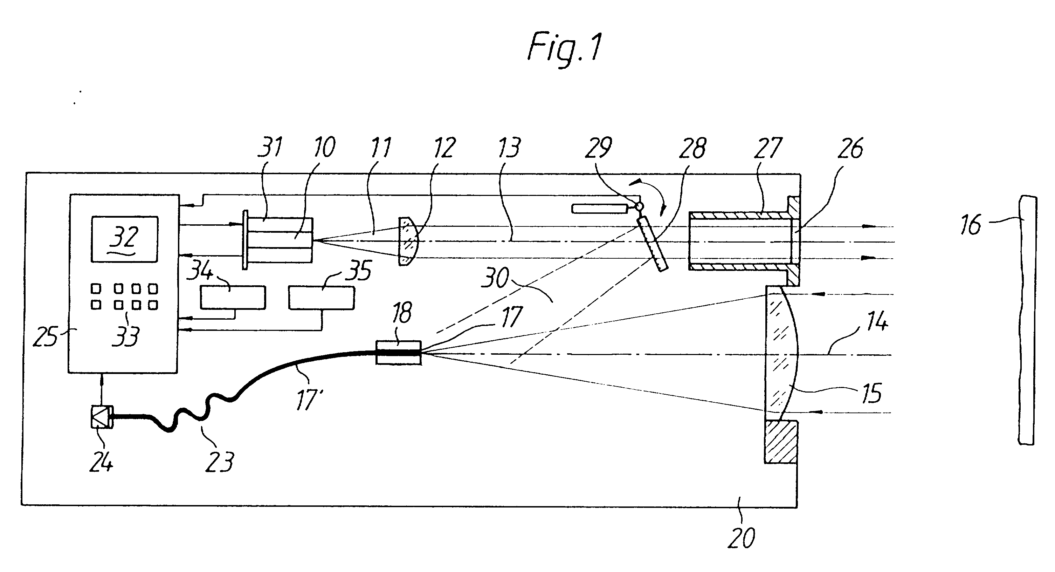

In Fig.1 erzeugt ein Halbleiterlaser 10 ein sichtbares Meßstrahlenbündel 11, das durch ein Kollimatorobjektiv 12 in Richtung der optischen Achse 13 als Parallelstrahlenbündel ausgesendet wird und einen Durchmesser von etwa 4 mm hat. Die optische Achse 14 des Empfangsobjektivs 15 verläuft zumindest angenähert parallel zur optischen Achse 13 des Kollimatorobjektivs 12 und liegt mit dieser in einer Ebene. Der Durchmesser des Empfangsobjektivs 15 beträgt etwa 30 mm und der Aufnahmewinkel etwa 120°, so daß einerseits der Bündelquerschnitt für von weit entfernten Objekten 16 reflektierte Strahlungsintensitäten ausreichend groß ist und andererseits auch die von nahen Objekten unter großem Einfallswinkel reflektierte Strahlung aufgenommen werden kann.

Das Lichtleiterende mit der Lichtleitereintrittsfläche 17 ist von einer Halterung 18 umfaßt. Der Lichtleiter 17' ist in hinteren Abschnitt 23 mehrfach gekrümmt fixiert. An seinem Ende ist der Lichtleiteraustrittsfläche ein opto-elektronischer Wandler 24 nachgeschaltet. Die Empfangssignale werden einer Auswerteeinrichtung 25 zugeführt.

Im Bereich des aus dem Gehäuse 20 der Vorrichtung austretenden Meßstrahlenbündes 11 ist eine reflexarm verspiegelte Abschlußscheibe 26 eingesetzt, die zur Unterdrückung von Reflexen auch schräg zum Strahl gestellt sein kann. Um zu vermeiden, daß Reststreuungen zur Lichtleitereintrittsfläche 17 gelangen, ist außerdem eine rohrförmige Blende 27 vorgesehen. Vor der Lichteintrittsöffnung dieser Blende 27 ist eine schaltbare Strahlenumlenkeinrichtung 28 angeordnet, die um eine Achse 29 motorisch schwenkbar ist. Die vom Meßstrahlenbündel 11 beaufschlagte Oberfläche der Strahlenumlenkeinrichtung 28 ist streuend, wobei ein divergenter Streukegel 30 erzeugt wird. Die Auswerteeinrichtung 25 enthält auch die Elektronik zur Modulation des Halbleiterlasers 10. Zur Justierung der Abstrahlrichtung des Halbleiterlasers 10 auf die optische Achse 13 des Kollimatorobjektivs 12 kann das Gehäuse des Halbleiterlasers 10 um eine Achse 31 oder eine dazu senkrecht stehende Achse schwenkbar gelagert sein. Die Justierung kann in Abhängigkeit von einem ausgewählten Empfangssignal motorisch über die Auswerteeinrichtung 25 gesteuert werden.

Die Auswerteeinrichtung 25 enthält eine Anzeigevorrichtung 32 und eine Tastatur 33, über die z.B. Korrekturwerte oder ergänzende Informationen zur aktuellen Distanzmessung eingegeben werden können. Eine wichtige ergänzende Information ist die Berücksichtigung der Horizontallage bzw. Vertikallage der durch die beiden optischen Achsen 13, 14 definierten Ebene, um tatsächlich senkrecht zum Objekt messen zu können. Dazu kann der Vorrichtung z.B. ein zweiachsiger elektronischer Neigungsmesser 34 zugeordnet sein, dessen Horizontalachsen in der Ebene der optischen Achsen 13, 14 liegen und parallel und senkrecht zu diesen Achsen ausgerichtet sind.

Die Ausgangssignale des Neigungsmessers 34 können der Auswerteeinrichtung 25 zugeführt und bei der Distanzmessung automatisch berücksichtigt werden. Sie können aber auch zur mechanischen Verstellung des Halbleiterlasers 10 oder eines nicht dargestellten ativen optischen Elementes im Sendestrahlengang verwendet werden, um das kollimierte Strahlenbündel automatisch zu horizontieren.

Neben einer Information über die Neigung der Vorrichtung im Raum erweitert die Berücksichtigung des Azimuts, d.h. des Winkels, unter dem das Meßstrahlenbündel in der Horizontalebene auf die angemessene Objektfläche auftrifft, die Möglichkeiten der Distanzmessung, und zwar in Form einer polaren Aufnahme der Meßwerte. Dazu kann der Vorrichtung ein digital-magnetischer Kompaß 35 zugeordnet sein, dessen Azimutreferenzrichtung parallel zur optischen Achse 13 des Kollimatorobjektivs 12 ausgerichtet ist. Mehrere Distanzmessungen mit Berücksichtigung der Neigung und des Azimuts des Meßstrahlenbündels erlauben in an sich bekannter Weise die Bestimmung von Punkten und Flächen im Raum und auch die Bestimmung der Lage von Flächen zueinander von einem einzigen Meßstandort aus. Ebenso ist die rechnerische Ermittlung von Horizontaldistanzen möglich, wie sie sonst nur bei Meßsystemen mit mechanischen Achsen, elektronischen Tachymetern, möglich ist.

Als Nullpunkt der Messung können die Vorderfläche, die Rückfläche oder auch die Mitte des Gehäuses 20 der Vorrichtung definiert und wahlweise z.B. über die Tastatur 33 in die Auswerteeinrichtung 25 eingegeben sowie von ihr automatisch bei der Distanzmessung berücksichtigt werden.

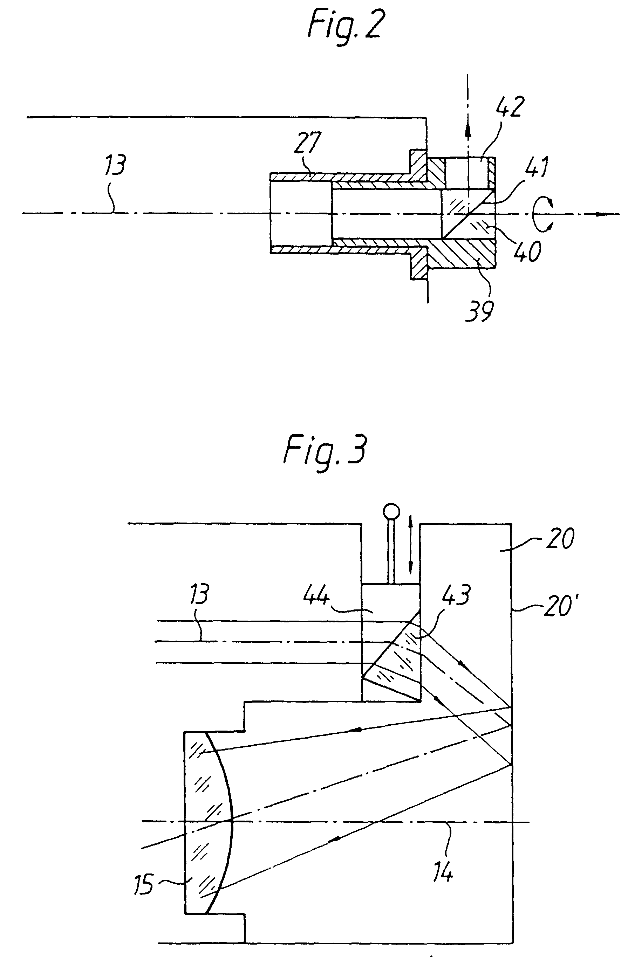

Eine Erweiterung des Anwendungsbereichs der erfindungsgemäßen Vorrichtung ergibt sich durch den Einsatz eines drehbaren Zweistrahlprismas in das austretende kollimierte Meßstrahlenbündel. Wie in Fig.2 dargestellt, kann dazu die Abschlußscheibe 26 entfernt und an ihrer Stelle ein Tubus 39 in die rohrförmige Blende 27 eingesetzt werden. In den Tubus 39 ist ein Prisma 40 mit strahlteilender Kittfläche 41 eingesetzt. Durch eine Öffnung 42 im Tubus 39 kann auf diese Weise ein zusätzlicher sichtbarer Strahl senkrecht zur optischen Achse 13 des Meßstrahlenbündels erzeugt werden. Dieser Strahl kann z.B. dazu verwendet werden, ihn an eine vorhandene Fläche anzulegen, um Abstände senkrecht zu dieser Fläche messen zu können. Bei senkrecht zum Meßobjekt ausgerichteter Vorrichtung können mit dem zusätzlichen Strahl auch Abstandswerte auf andere Flächen übertragen werden.

Der in Fig. 2 dargestellte Vorsatz zur Erzeugung eines Orientierungsstrahles senkrecht zum Meßstrahl kann in an sich bekannter Weise auch durch Prismen mit mehreren Teilerflächen oder anderer Strahlenumlenkung, wie z.B. bei einem Pentaprisma, abgeändert werden.

Eine weitere Aufgabe des Vorsatzes kann darin bestehen, die optische Achse 13 des Meßstrahles in Richtung auf die optische Achse 14 des Empfangsobjektivs 15 umzulenken. Eine solche Ausgestaltung ist in Fig. 3 dargestellt. Sie hat den Vorteil, daß sogar an der Vorderkante 20' des Gehäuses 20 anliegende Objekte Strahlung in den Empfangsstrahlengang reflektieren. Aus konstruktiven Gründen der Halterung des Objektivs 15 ist es in diesem Fall vorteilhaft, das Empfangsobjektiv 15 etwas in das Gehäuse 20 hinein zu verlegen. Das zur Umlenkung der Strahlen vorgesehene Prisma 43 ist auf einem Schieber 44 angeordnet, der bei Messung von sehr kurzen Entfernungen von Hand in den Strahlengang eingeschoben werden kann.

Der Aufwand an Funktionselementen für die erfindungsgemäße Vorrichtung ist gering und diese eignen sich für eine Miniaturisierung. Die Vorrichtung kann daher sehr kompakt und insbesondere als Taschengerät ausgestaltet werden.

## Patentansprüche

1. Vorrichtung zur Distanzmessung mit
- einem von einem Halbleiterlaser (10) erzeugten sichtbaren Meßstrahlenbündel (11),
- einem Kollimatorobjektiv (12) zur Kollimation des Meßstrahlenbündels (11) in Richtung der optischen Achse (13) des Kollimatorobjektivs (12),
- einer Schaltungsanordnung zur Modulation der Meßstrahlung,
- einem Empfangsobjektiv (15) zur Aufnahme und Abbildung des an einem entfernten Objekt (16) reflektierten Meßstrahlenbündels (11) auf eine Empfangseinrichtung,
- und einer elektronischen Auswerteeinrichtung (25) zur Ermittlung der Distanz aus der Modulationsphase des reflektierten Meßstrahlenbündels (11) und zur Anzeige der zum Objekt (16) gemessenen Distanz, **dadurch gekennzeichnet,** daß ein schaltbare Strahlumlenkeinrichtung (28) zur Erzeugung einer internen Referenzstrecke zwischen dem Halbleiterlaser (10) und der Empfangseinrichtung vorgesehen ist und daß die Meßstrahlung pulsmoduliert ist mit Anregungspulsen einer Pulsbreite unterhalb von zwei Nanosekunden.

2. Vorrichtung nach Anspruch 1, **dadurch gekennzeichnet,** daß die Empfangseinrichtung einen Lichtleiter (17') mit nachgeschaltetem optoelektronischen Wandler (24) enthält, wobei der Lichtleiter (17') in seinem Verlauf mehrfach gekrümmt (23) ist.

3. Vorrichtung nach einem der vorhergehenden Ansprüche, **dadurch gekennzeichnet,** daß als schaltbare Strahlumlenkeinrichtung für die Erzeugung der Referenzstrecke ein lichtstreuendes Element (28) vorgesehen ist, dessen Streucharakteristik (30) dem Ort der Lichtleitereintrittsfläche (17) angepaßt ist.

4. Vorrichtung nach einem der vorhergehenden Ansprüche, **gekennzeichnet durch** einen elektronischen Neigungsmesser (34), dessen Meßachse parallel zur optischen Achse (13) des Kollimatorobjektis (12) ausgerichtet ist.

5. Vorrichtung nach einem der vorhergehenden Ansprüche, **gekennzeichnet durch** einen zwei-achsigen elektronischen Neigungsmesser, (34) dessen eine Achse parallel zur optischen Achse (13) des Kollimatorobjektivs (12) und dessen andere Achse senkrecht dazu und parallel zu der Ebene ausgerichtet ist, die durch die optischen Achsen (13, 14) des Kollimatorobjektivs (12) und des Empfangsobjektivs (15) gebildet wird.

6. Vorrichtung nach einem der vorhergehenden Ansprüche, **gekennzeichnet durch** einen digital-magnetischen Kompaß (35), dessen Azimut-Referenzrichtung parallel zur optischen Achse (13) des Kollimatorobjektivs (12) ausgerichtet ist.

7. Vorrichtung nach einem der Ansprüchen 4 bis 6, **dadurch gekennzeichnet**, daß die Ausgangssignale des Neigungsmessers (34) und/oder Kompaß (35) der Auswerteeinrichtung (25) als zusätzliche Eingangssignale zugeleitet werden.

8. Vorrichtung nach einem der Ansprüche 4 oder 5, **dadurch gekennzeichnet**, daß die Ausgangssignale des Neigungsmessers (34) einem aktiven optischen oder mechanischen Stellelement zur Horizontierung des kollimierten Meßstrahlenbündels (11) zugeleitet werden.

9. Vorrichtung nach einem der vorhergehenden Ansprüche, **gekennzeichnet durch** ein in das austretende Meßstrahlenbündel (11) einfügbares Prisma (40, 41; 43).

## Claims

1. Distance measuring device comprising
- a visible measuring beam (11), produced by a semiconductor laser (10),
- a collimator lens (12) for collimating the measuring beam (11) in the direction of the optical axis (13) of the collimator lens (12),
- a circuit arrangement for modulating the measuring radiation,
- a receiving lens (15) for receiving and focusing the measuring beam (11) reflected by a remote object (16) on a receiving device,
- and an electronic evaluation device (25) for determining the distance from the modulation phase of the reflected measuring beam (11) and for displaying the distance measured to the object (16), characterized in that a switchable beam deflection device (28) for generating an internal reference distance is provided between the semiconductor laser (10) and the receiving device and that the measuring radiation is pulse-modulated with excitation pulses having a pulse width of less than two nanoseconds.

2. Device according to Claim 1, characterized in that the receiving device contains an optical fibre (17') with a down-circuit optoelectronic converter (24), the optical fibre (17') being multiply curved (23) along its path.

3. Device according to any of the preceding Claims, characterized in that a light-scattering element (28) is provided as the switchable beam deflection device for generating the reference distance, the scattering characteristic (30) of which element is adapted to the location of the optical fibre entry surface (17).

4. Device according to any of the preceding Claims, characterized by an electronic inclinometer (34) whose measuring axis is aligned parallel to the optical axis (13) of the collimator lens (12).

5. Device according to any of the preceding Claims, characterized by a two-axis electronic inclinometer (34), one of whose axes is aligned parallel to the optical axis (13) of the collimator lens (12) and whose other axis is aligned perpendicular thereto and parallel to the plane which is formed by the optical axes (13, 14) of the collimator lens (12) and of the receiving lens (15).

6. Device according to any of the preceding Claims, characterized by a digital magnetic compass (35) whose azimuthal reference direction is aligned parallel to the optical axis (13) of the collimator lens (12).

7. Device according to any of Claims 4 to 6, characterized in that the output signals of the inclinometer (34) and/or compass (35) are fed as additional input signals to the evaluation device (25).

8. Device according to either of Claims 4 and 5, characterized in that the output signals of the inclinometer (34) are fed to an active optical or mechanical final control element for aligning the collimated measuring beam (11) in the horizontal direction.

9. Device according to any of the preceding Claims characterized by a prism (40, 41; 43) which is insertable into the emerging measuring beam (11).

## Revendications

1. Dispositif de mesure de distance, avec :
- un faisceau de rayon de mesure (11) visible, généré par un laser à semi-conducteur (11),
- un objectif collimateur (12) pour collimater le faisceau de rayon de mesure (11) dans la direction de l'axe optique (13) de l'objectif collimateur (12),
- un circuit pour assurer la modulation du rayonnement de mesure,
- un objectif récepteur (15) pour assurer la réception et la représentation, sur un dispositif récepteur, du faisceau de rayon de mesure (11) réfléchi sur un objet (16) éloigné,
- et un dispositif d'évaluation électronique pour déterminer la distance à partir de la phase de modulation du faisceau de rayon de mesure (11) réfléchi et pour afficher la distance mesurée par rapport à l'objet (16), caractérisé en ce qu'est prévu un dispositif de déviation de rayon (28) commutable, pour générer une distance de référence interne entre le laser à semi-conducteur (10) et le dispositif récepteur, et en ce que le rayonnement de mesure est modulé par impulsions, avec des impulsions d'excitation d'une largeur d'impulsion inférieure à deux nanosecondes.

2. Dispositif selon la revendication 1, caractérisé en ce que le dispositif récepteur contient un guide de lumière (17') équipé d'un convertisseur (24) optoélectronique branché en aval, le guide de lumière (17') ayant une allure à plusieurs courbures (23).

3. Dispositif selon l'une des revendications précédentes, caractérisé en ce qu'est prévu comme dispositif de déviation des rayons, commutable, pour générer la distance de référence, un élément à dispersion de lumière (28), dont la caractéristique de dispersion (30) est adaptée au site de la surface d'entrée (17) du conducteur de lumière.

4. Dispositif selon l'une des revendications précédentes, caractérisé par un détecteur d'inclinaison (34) électronique, dont l'axe de mesure est orienté parallèlement à l'axe optique (13) de l'objectif collimateur (12).

5. Dispositif selon l'une des revendications précédentes, caractérisé par un détecteur d'inclinaison (34) électronique à deux axes, dont un axe est orienté parallèlement à l'axe optique (13) de l'objectif collimateur (12) et dont l'autre lui est orienté perpendiculairement et parallèlement au plan constitué par les axes optiques (13, 14) de l'objectif collimateur (12) et de l'objectif récepteur (15).

6. Dispositif selon l'une des revendications précédentes, caractérisé par un compas (35) de nature magnétique-numérique, dont la direction de référence d'azimuts est orientée parallèlement à l'axe optique (13) de l'objectif collimateur (12).

7. Dispositif selon l'une des revendications 4 à 6, caractérisé en ce que les signaux de sortie du détecteur d'inclinasion (34) et/ou du compas (35) sont amenés au dispositif d'évaluation (35), sous la forme de signaux d'entrée supplémentaires.

8. Dispositif selon l'une des revendications 4 ou 5, caractérisé en ce que les signaux de sortie du détecteur d'inclinaison (34) sont amenés à un élément de réglage actif, optique ou mécanique, pour assurer l'ajustement d'horizon du faisceau de rayon de mesure (11) collimaté.

9. Dispositif selon l'une des revendications précédentes, caractérisé par un prisme (40, 41; 43) insérable dans le faisceau de rayon de mesure (11) sortant.
